# EUROPÄISCHE PATENTSCHRIFT

(11) **EP 1 896 791 B1**
(45) Veröffentlichungstag und Bekanntmachung des Hinweises auf die Patenterteilung: **28.09.2011**
(21) Anmeldenummer: 06763673.8
(22) Anmeldetag: 13.06.2006
(51) Int. Cl.: F28D 20/00, F25B 25/02

(54) **WÄRMESPEICHER HOHER SPEICHERDICHTE**
HEAT STORE WITH A HIGH STORAGE DENSITY
ACCUMULATEUR DE CHALEUR A HAUTE DENSITE D'ACCUMULATION

(30) Priorität: 13.06.2005 DE 102005000075; 21.10.2005 DE 102005051574
(43) Veröffentlichungstag der Anmeldung: 12.03.2008
(73) Patentinhaber: PBB GbR, 13088 Berlin (DE)
(72) Erfinder: STACH, Helmut, 15752 Prieros (DE); FUESTING, Bernd, 13088 Berlin (DE); MUENN, Peter, 13089 Berlin (DE)
(74) Vertreter: Wehlan, Helmut
(86) Internationale Anmeldenummer: PCT/EP2006/063148
(87) Internationale Veröffentlichungsnummer: WO 2006/134107

(56) Entgegenhaltungen:
- DE-A1- 19 811 302
- DE-A1- 19 963 322
- DE-C1- 19 735 007
- FR-A1- 2 651 565

## Beschreibung

Die Erfindung betrifft einen Wärmespeicher hoher Speicherdichte nach dem Sorptionsprinzip mit einer verbesserten Führung des Arbeitsmittels, insbesondere für die kurzzeitig-periodische Speicherung von Nutz- und Abwärme gemäß dem Oberbegriff des Patentanspruchs 1. DE-A1-19 963 322 beschreibt einen derartigen Wärmespeicher.

### Stand der Technik

Wärmespeicher sammeln ungenutzt anfallende Wärme mit Hilfe eines Arbeitsmittels gezielt und nutzerfreundlich in einem sorptionsaktiven mikroporösen Speichermaterial. Bevorzugte Anwendungsbereiche des Wärmespeichers gibt es vor allem in wärmenutzenden Betrieben, die in Spitzenlastzeiten über keine kostengünstige Versorgung mit Wärme verfügen. Günstige Möglichkeiten für einen Einsatz ergeben sich für die kurzzeitige Speicherung von Wärme für die Gebäude- und Haustechnik, wie zur Heizung und Klimatisierung von Räumen, zur Brauchwassererwärmung oder für die Durchführung anderer zeitlich begrenzter und wärme-verbrauchender technischer Prozesse vor dem Ort ihres Abrufs. Aussichtsreich erscheinen transportable Ausführungen für auf zivile Katastrophen gerichtete Einsatzbereiche.

Darüber hinaus kann in Kopplung mit Wärmespeichern durch Verdampfung eine Verdunstungskälte erzeugt werden, die zweckentsprechend für Kühlzwecke nutzbar ist.

Systeme zur Sorptionsspeicherung bestehen mindestens aus einem wärmeisolierten Behälter, der in vorbestimmter Folge mit Wärme beladen und gezielt wieder entladen wird. Zu diesem Zweck wird das Arbeitsmittel zyklisch mittels Verdampfern und Kondensatoren in einen gasförmigen Zustand übergeführt und wieder verflüssigt. Bevorzugtes Arbeitsmittel ist Wasserdampf. Für die industrielle Kälteerzeugung werden auch Arbeitsmittel wie bestimmte leicht verdampfbare Kohlenwasserstoffe genutzt.

Im Entladevorgang des Speichers wird das Arbeitsmittel durch Adsorption gebunden, so an Silicagel, Zeolithen oder an weiterentwickelten Sorbentien, wie an Metallsilikaten, darunter Alumosilikaten und Alumophosphaten. Die freigesetzte Sorptionswärme wird über angeschlossene Nutzwärmekreisläufe an weitere flüssige Wärmeträger abgegeben.

Im Beladevorgang der Speicher wird das Arbeitsmittel von den Sorbentien zyklisch durch Desorption entfernt. Das erfolgt bei stationären Speichervorrichtungen durch Zuführung von Wärme aus Energienetzwerken oder aus Einrichtungen zur Gewinnung von Solarenergie. In einem gleichlaufend parallelem Betrieb wird das Arbeitsmittel in Kondensatoren wieder verflüssigt. Die über der Verdampfungswärme des Arbeitsmittels liegende Überschusswärme wird als in den Wärmespeicher eingebrachte Desorptionswärme im Sorbens zurückgehalten. Die diesen Vorgängen zugrunde liegenden Kreisläufe von Wärmeträger und Arbeitsmittel entsprechen thermodynamischen Systemen, die sowohl geschlossene als auch halboffene darstellen.

In Schwachlastperioden kann als thermische Energie so Abwärme gespeichert werden, die beispielsweise bei energieintensiven und energieüberschüssigen Prozessen anfällt, wie bei der Metall- und Zementherstellung, der metallverarbeitenden Industrie, in Schmelzereien und Härtereien, aber auch in Lebensmittelbetrieben (wie in Bäckereien) oder bei der Getränkeherstellung (Brauereien). In Perioden gesteigerten Energiebedarfs werden so zusätzliche Anteile an Nutzwärme verfügbar, die sonst bisher rundweg unwirtschaftlich verschwendet werden.

Die Energiedichten von Sorptionsspeichern überschreiten diejenigen bekannter Latentwärmespeicher mindestens um das Doppelte sowie die herkömmlicher Wasserspeicher je nach Tiefe und Spanne des Ladezustandes um das Vierfache. Es ist ein ständiges Anliegen, die Energiespeicherdichten und den thermischen Wirkungsgrad der Speicher anzuheben.

Der Stand der Technik wird durch sogenannte Tank- in Tank- Vorrichtungen bestimmt. In diesen Sorptionswärmespeichern hoher Leistung werden der Verdampfer, der Kondensator und der Sorbensraum gemeinsam in einem Behälter mit dem Ziel vereinigt, eine hohen Kompaktheitsgrad und somit eine hohe Energiedichte zu erreichen. Zweckdienlich werden in bekannten Lösungen auch der Verdampfer und Kondensator zum Sorbensraum eng benachbart angeordnet und in einem gesonderten Kreislauf von Wärmeträgern durchströmt. Beispiele werden in den Schriften DE 40 19 669 A1, DE 198 11 302 A1 und EP 0 897 094 A1 gegeben. Das aktive Volumen des Speichers ist verschließbar und evakuierbar, um das zyklische Spiel zwischen Beladung und Entladung maximal auszunutzen. Die Größe des Beladungsspiels wird abhängig vom Druck und von der Temperatur durch Sorptionsgleichgewichte bestimmt.

Probleme sind mit den Transportvorgängen für Stoff und Wärme für die Heiz-, Kühl- und Arbeitsmittel im Inneren des Wärmespeichers und über die Oberflächen verbunden, die den Wärmetransport bestimmen bzw. vermitteln:
- Bei Sorptionsspeichern sollen die Porensysteme für hohe Speicherdichten vom Arbeitsmittel vollends ausgefüllt werden.
- Die Sorbentien weisen ein beschränktes eigenes Wärmeleitvermögen auf. Ein angestrebt guter Wärmeausgleich in allen Raumrichtungen im Behälter wird einerseits durch die an sich wärmevermittelnde Einbauten behindert. Hohe Füllungsanteile an Partikeln innerhalb von Einbauten erhöhen hingegen die Speicherdichte.
- Die frei verfügbaren Wege für den Stofftransport des Arbeitsmittels werden andernteils infolge höherer Füllungsanteile verringert. Die Maßstabsvergrößerung der Speicher ist eingeschränkt, weil das feste Sorbens nicht wie ein Fluid bewegt und demzufolge Strömungswege versperrt werden und folglich in Festbetten recht unübersichtliche Transportprozessen vorliegen.

Fortgeschrittene Sorptionswärmespeicher sind den eingeführten und genormten Technologien des Behälterbaus bereits günstig angepasst.. Mit einer größeren Anzahl von Wärmeträgerrohren in einer bevorzugten Längsrichtung sind diese für eine schnelle Verteilung des Arbeitsmittels auch in den Querrichtungen der Wärmespeicher bei gleichzeitig hoher Raumausfiillung mit Einbauten und Sorbentien gut geeignet.. Das erhöht die räumlich bezogene Speicherleistung als wichtiges Kriterium für die Effektivität der Speicher.

In vorangegangenen Lösungen wie in den Schriften DE 199 63 322 A1 und gleichlautend US 6,672,103 B1 wird bezüglich der Ausgestaltung auf bewähne Vorrichtungen zurückgegriffen, die Vorrausetzungen für eine Standardisierung in Herstellung und Betrieb besitzen. Darunter werden hauptsächlich nach DIN 28008, DIN 28182 und DIN 28185 genormte Rohrbündel-Wärmeübertrager verwendet. Auch für gebäudetechnische Zwecke geeignete Heizkörper, Wasserrohrkessel von Dampferzeugern oder röhrenofenähnliche Vorrichtungen der chemischen Industrie bzw. aus anderweitiger verfahrenstechnischer Verwendung werden genutzt. Eine Überlegung sieht vor, dass bevorzugt sorptiven Festbetten angepasste Wärmeübertrager mit Rohrböden einer runden oder einer Rechtkantgeometrie den Wärmespeichern angepasst sind Der Rohrkörper bildet mit den Rohrböden eine Tragstruktur und wird als ein tragender Grundkörper mit einer ihn umgebenden Hülle verwendet. Die Hülle ist hermetisch verschließbar und auch evakuierbar, um die zwischen einer Be- und Entladung erforderliche Druckspanne und damit die bestehenden Beladungsspiele angenähert optimal auszunutzen.

Mindestens zwischen zwei Rohrböden sind Wärmeträgerrohre befestigt, die entsprechend den vorgegebenen Rohrbodenteilungen die Sorbensschüttung durchdringen. Übliche Rohre innerhalb der Wärmeaustauscher erzielen eine ausreichende Längsstabilität, die Rohrböden selbst - eine hohe Querstabilität - ähnlich einer sich selbst tragenden Karosseriestruktur, ohne dass die relativ hohe Masse der Sorbentien eine den Behälter verstärkende Stabilisierung erfordert.

Die Wärmeträgerrohre werden durch die Öffnungen der ebenfalls standardisierten und quer in einer Längsrichtung gerichteten Fließböden mit entsprechenden Teilungsverhältnissen der öffnungen unbefestigt durch das Sorbens hindurchgeführt. Die Ausformung der Öffnungen entsprechen etwa denjenigen Formen der Wärmeträgerrohre. Zwischen den Rohren und den beispielsweise durch Stauchung aufgebördelten Rändern der Öffnungen bestehen geringe Abstände innerhalb genormter zulässiger Toleranzen. Diese Abstände bilden zwischen den entsprechenden Peripherien der Rohre und den Öffnungen in den Fließböden die kreisringförmigen Durchtrittsöffnungen für das dampfförmige Arbeitsmittel. Es versteht sich von selbst, dass diese im Millimeterbereich liegenden Toleranzabstände unterhalb der kleinsten Abmessungen der Sorbenspartikel der Schüttung liegen.

Der Transport des flüssigen oder des bereits dampfförmigen bzw. teilkondensierten Arbeitsmittels in den Querrichtungen zwischen den Rohr- und den Fließböden des Wärmeübertragers wird durch temperaturbeständige Vliesschichten übernommen. Die Vliesschichten bestehen bevorzugt aus einem Faservliesstoff, der saugfähig ist und das noch flüssige oder auch anteilig verdampfte Arbeitsmittel aufnimmt. Ein direkter, das oft hydrothermal instabile Sorbens schädigender Eintritt in Form von Tropfen in die Sorbensschüttung wird abgewendet. Die aufgebördelten Ränder der Fließböden verhindern, dass etwa die Fließböden bedeckende Strähnen noch nicht verdampften Arbeitsmittels in die Sorbensschüttung eindringen. Vertikal um eine Querachse oder Querebene gespiegelte Strukturen der Fließböden ermöglichen umgekehrt ein günstiges Ablaufen des bereits teilkondensierten Arbeitsmittels in den Sumpf des Wärmespeichers und in Richtung dessen Ablaufstutzen.

Die Vliesschichten können auch aus einem eingefügten flüssigkeitsaufnehmenden und temperaturstabilen Material bestehen, wie aus temperaturbeständigen Polymerpartikeln oder porösen mineralischen Granulaten. Ebenso können sie aus saugfähigen Fasergelegen, Gewöllen oder Gestricken bestehen. Die Bestandteile der Vliesschichten können durch das Arbeitsmittel Wasser naturgemäß benetzbar oder gesondert hydrophilisiert sein. Innerhalb der Vliesschicht können auch Hilfsheizungen angeordnet sein, so in Form von zusätzlichen Wärmeaustauschern, wärmeleitenden Metallteilen oder auch als elektrische Heizwicklungen, die eine Verdampfung des Arbeitsmittels in der Startphase des Speichers, vor allem in kalten Jahresperioden, ermöglichen.

Es ist besonders von Verzug, dass die Vliesschichten für die Verdampfer- und Kondensatorteile wegen der auf das Arbeitsmittel ausgeübten Kapillarkräfte in gewisser Unabhängigkeit von der Erdschwere wirken. Es sind auch vertikale bzw. schräge Anordnungen der Wärmespeicher zwecks erwünschter Anpassung an örtliche Verhältnisse möglich, so bei eingeschränkten Stellflächen. Ähnlich werden in einem Vorschlag (DE 10 2004 059 098 A1) transportable Energiecontainer nach dem Sorptionsprinzip beschrieben, die im Interesse einer Anpassung der Vorrichtung an standardisierte Containerhüllen weitgehend aus einer Struktur horizontaler Rohrbündel mit vertikal angeordneten Fließböden bestehen.

Der Entladungsvorgang des Speichers erfolgt vorteilhaft autotherm. Mit Öffnen mindestens eines der Ventile für das Arbeitsmittel im Bereich eines Rohrbodens entsteht innerhalb des Sorbens sprungartig eine Temperaturerhöhung im Verdampferteil: Die Einleitung des Verdampfungsvorganges beginnt infolge eines Druckgefälles selbständig aufgrund des stetigen Vorhandenseins geringer Restdampfdrücke des Arbeitsmittels bei noch niedrigen Temperaturen der Fließböden und der Vliesschichten. Mit steigender Erhöhung der Temperatur im Wärmespeicher beginnt das Arbeitsmittel auch aus einem zugehörigen Arbeitsmitteltank zu verdampfen und tritt dann dampfförmig in die Vliesschicht ein. Der Sorptionswärmespeicher besitzt ein stabiles Betriebsverhalten und auch gewisse "Notstarteigenschaften", ohne dass es zum unerwünschten und betriebsstörenden Eindringen von Anteilen des noch flüssigem Arbeitsmittel in die Sorbensschicht kommt. Der zweckmäßig völlig gleichartig gestaltete zweite Fließboden in Nähe eines zweiten Rohrbodens kann eine Vliesschicht mit dem gleichen Faservliesstoff enthalten, wie über den beim Beladevorgang des Sorptionswärmespeichers auch die Adsorption oder Desorption des Arbeitsmittels erfolgen kann.

Es werden bereits modifizierte Wärmeträgerrohre in einer ausgewählten zylindrischen oder rechtkantförmigen Teilungsanordnung der Rohr- und Fließböden selbst für Verdampfungs- und Kondensationsvorgänge genutzt, um in der Vorzugsrichtung, der Längsachse des Wärmespeichers, eine strömungsgünstige Führung bei einer bisher vernachlässigt günstigen Verteilung des Arbeitsmittels auch in der Längsrichtung zu bewirken. Das ist besonders dann sinnvoll, wenn ein großes Längen-Querflächen-Verhältnis des Wärmespeichers anzupassen ist und die Gefahr eines unvollkommenen Längsausgleichs der Strömung des Arbeitsmittels in der Sorbensschüttung ausgeschlossen werden soll. Als großes Längen-Querflächen-Verhältnis wird üblich ein Wert über 4 angesehen.

Es werden auch Rippenrohre als Wärmeträgerrohre eingesetzt, die gleichzeitig als Verdampferrohre an ihrem Umfang mit perforiertem Netzwerk umgeben sind und so zusätzliche Strömungskanäle für das Arbeitsmittel bilden und die Öffnungen für dessen Durchtritt in die Sorbensschüttung aufweisen.

Nachteilig wurde erkannt, dass mit Netzwerken umgebene Rippenrohre eine komplizierte Vorfertigung, die Verwendung mehrerer unterschiedlicher, oft artfremder Materialien und eine Fertigung in mehrstufigen Arbeitsschritten erfordern.

Auf unterschiedlichen technischen Gebieten werden metallische Sonderprofile genutzt. So ist weiterhin als älterer Stand der Technik bekannt, dass als Elemente zur Führung von Wärmeträgern in der Brenntechnik (DE 29 52 152 A1) gegebenenfalls zwei Hohlprofile verschiedener Nennweiten axial ineinandergeschoben und formschlüssig miteinander vereinigt werden. Ähnlich dienen verschiedene Hohlprofile, so zur Verstärkung von rohrartigen Holmen und Säulen, wie in der Kfz-Technik (DE 92 00 388 U1; DE 200 05 571 U1; US 6,332,302 B1).

Vermittels Wulsten (DE 42 17 758 A1) an Rundbiegemaschinen sind so gas- und flüssigkeitsdichte Befestigungen an tragenden Bodenplatten möglich. Ebenso erlauben bekannte Verbindungskappen (DE 40 05 576 A1) die druckdichte und temperaturbeständige reibschlüssige Einbindung von gebördelten Rohren an Böden.

Des weiteren sind bereits stangenförmige und gekammerte Bauelemente (DE 24 36 547 A1) sowie strangförmige Kunststoffhohlprofile (DE 20 09 933 A1) bekannt, die für Leichtbaukonstruktionen Verwendung finden, darunter als strangförmig zusammenfügbare Elemente in der Bautechnik (DE 21 53 394 A1) oder auch als konstruktiv - tragend ausgebildete Wärmerohre (heat pipes) in der Raumfahrt (DE 41 30 976 A1). Das Verformen von Druckguss, insbesondere von Aluminium mit niedriger Streckgrenze (DE 197 09 947 A1), eignet sich besonders für zylindrische Teile, die bisher aus Gründen der Gewichtsersparnis aus Blechen hergestellt wurden. Damit wird eine Verformung auch von zähfließenden Druckgussteilen mittels Kanten ermöglicht.

Die Verwendung all dieser Gestaltungen zur Strömungsführung des Arbeitsmittels für mit Fließböden ausgerüstete Wärmespeicher wurde jedoch bisher nicht bekannt.

### Aufgabe der Erfindung

Aufgabe der Erfindung ist deshalb, die Weiterentwicklung von bisherigen Glattrohren für die Wärmeführung in räumlich ausgedehnten Wärmespeichern, die die Nachteile einer noch mängelbehafteten Strömungsführung für das Arbeitsmittel vermeiden.

### Lösung der Aufgabe

Die Aufgabe wurde gemäß den Merkmalen der Patentansprüche gelöst. Der erfindungsgemäße Wärmespeicher hoher Speicherdichte (1) arbeitet nach dem Sorptionsprinzip und eignet sich insbesondere für die kurzzeitig-periodische Speicherung von Nutzwärme und von Abwärme industriellen oder gewerblichen Ursprungs oder von Niedertemperaturwärme solaren oder terrestrischen Ursprungs mit nachfolgender Abgabe der Wärme an einen Wärmenutzer, wobei mit Hilfe eines verdampfbaren und wieder verflüssigbaren Arbeitsmittels, bevorzugt Wasser, in einem Entladevorgang ein durch Verdampfen erzeugter Arbeitsmitteldampf an einem mikroporösen Sorbens adsorbiert und die entstehende Sorptionswärme zum überwiegenden Anteil aus dem Wärmespeicher wieder herausgeführt wird, und in einem Ladevorgang das durch nachfolgendes Kondensieren verflüssigte Arbeitsmittel von dem mikroporösen Sorbens desorbiert, die über der Verdampfungswärme des Arbeitsmittels liegende Überschusswärme als in den Speicher eingebrachte Desorptionswärme im Sorbens gespeichert wird und die vorliegenden thermodynamischen Systeme sowohl geschlossene als auch halboffene sind, der Wärmespeicher (1) aus dem Rohrmantel (2), mindestens aus je einem Schuss (3; 3'), einem Rohrboden (8; 8') und einem Fließboden (9; 9') besteht, und die Wärmeträgerrohre (10) fest in mindestens einem der Rohrböden (8; 8') eingebunden sind und durch einen Fließboden (9; 9') hindurchgehen, sowie auf mindestens einem Fließboden (9; 9') um durch diesen hindurchführende Wärmeträgerrohre (10) spaltartige Öffnungen ausgebildet werden, die mit der Sorbensschüttung (14) in Verbindung stehen, dadurch gekennzeichnet, dass sich zwischen den Wärmeträgerrohren (10) oder Wärmeträgerprofilen (10') auf den Fließböden (9; 9') kanalartige Fließvertiefungen (11; 11') befinden, die von den Vliesschichten (13; 13') durchdrungen sind, und die Arbeitsmittelführungen (16; 16') durch gegebenenfalls angepasst ausgeformte oder formperforierte Spaltöffnungen (12; 12') hindurchgeführt sind, wobei diese nicht zwangsläufig materialschlüssig eingepasst sind, und sich die Arbeitsmittelführungen (16;16') in unmittelbarer Berührung mit den Wärmeträgerrohren (10) oder Wärmeträgerprofilen (10') befinden.

Erfindungsgemäß wird erreicht, dass gesonderte oder integrierte Führungen für das Arbeitsmittel mit Wärmeträgerrohren bzw. -profilen mindestens in einem direkten Formkontakt, jedoch nicht zwangsläufig in einer formschlüssigen Verbindung miteinander stehen.

Der Kopf- und / oder Bodenteil eines Rohrbündelwärmespeichers besteht wesentlich jeweils aus einem Rohrboden, einem Fließboden mit einer Vliesschicht und den Wärmeträgerrohren, zwischen denen sich die Sorbensschüttung erstreckt. Durch den Fließboden werden Arbeitsmittelführungen parallel verlaufend zu den Wärmeträgerrohren durch besonders ausgeformte Spaltöffnungen hindurchgeführt, die nicht in den zugehörigen Rohrböden befestigt sein müssen. Die Arbeitsmittelführungen besitzen zwischen dem Rohrboden und dem Fließboden formperforierte Öffnungen, die in die Vliesschicht gerichtet sind und das dampfförmige Arbeitsmittel durchlassen. Unterhalb des Fließbodens sind weitere Öffnungen in die Sorbensschüttung gerichtet, die für den Austausch des Arbeitsmittels mit der Sorbensschicht sorgen.

Von besonderem Vorteil ist, dass sowohl die Fließböden mit ihren vorzugsweise formperforierten Öffnungen wie auch die Arbeitsmittelführungen nicht nur aus einem metallischen Flachmaterial, z. B. durch Stanzen und spanlose Formgebung hergestellt werden können. Es können fertigungsgünstig auch verschiedenartige temperaturbeständige Kunststoffe eingesetzt werden, zumindest bei einer Verwendung des Arbeitsmittels Wasserdampf. Vorzugsweise werden Faserverbundmaterialien, darunter Glasfasermaterialien eingesetzt. Damit stehen zur Herstellung einstufige und kostengünstige Fertigungsverfahren im Vordergrund, wie Schmelzpressen, Blasformen und sowie weitere thermische Formverfahren.

Das verdampfende bzw. kondensierende Arbeitsmittel wird innerhalb der Vliesschicht durch die Öffnungen geleitet. Die Öffnungen vermitteln so die Verteilung des dampfförmigen Arbeitsmittels zwischen den Arbeitmittelführungen und der Sorbensschüttung.

Die Arbeitsmittelführungen müssen nicht zwangsläufig dampfdicht in die Spaltöffnungen eingepasst sein, was den Fertigungsaufwand für Rohrdurchtritte zwischen benachbarten Böden wesentlich vereinfacht

Überraschenderweise hat sich herausgestellt, dass eine hohe räumliche Wärmespeicherdichte eingestellt wird, da der zur Verfügung stehende und durch den Rohrmantel umschlossene Raum örtlich und zeitlich optimal vom Arbeitsmittel durchdrungen wird. Optimal eingestellt wird auch der Material- und Fertigungsaufwand zur Bereitstellung einer inneren Wärmeübertragungsfläche im Verhältnis zum speicheraktiven Volumenanteil der Sorbensschüttung.

Die Arbeitsmittelführungen mit ihren Öffnungen für den Durchtritt des Dampfes bestehen in der Regel aus schalenartigen oder U-profilartigen Elementen.

Die Arbeitsmittelführungen sind über Längskanten seitlich und ein- bis dreizügig getrennt an die Wärmeträgerrohre angepasst und - in einer ersten Ausführung - nicht mit diesen materialschlüssig vereinigt. Vorteilhaft befinden sie sich federnd verklemmt und mindestens punktweise reibschlüssig in die Öffnungen der Fließböden zwischengesetzt und sind in den Spaltöffnungen des Fließbodens gegebenenfalls an die Wärmeträgerrohre und durch Rasten unterstützt angebracht sowie an diesen gehaltert. Die schalenartigen oder U-bzw. S-profilartigen Elemente der Arbeitsmittelführungen können anstelle der runden auch andersgeartete, so beispielsweise zahnartige oder anders gezackte Öffnungen besitzen, die zur Hauptachse und in der Längsausdehnung an den längsbegrenzenden Rändern dieser Elemente parallel verlaufen und / oder an diesen Rändern Klammern zu ihrer Befestigung aufweisen, wobei die Wärmeträgerrohre zumindest teilweise von diesen umschlossen werden. Die Arbeitsmittelführungen sind auch aus einem federelastischen Material in Form der Klammern an die Wärmeträgerrohre oder -profile innerhalb den Ebenen zwischen den Rohrböden und den Fließböden angebracht. Rasten gewährleisten den anpassungsfähigen Sitz der Arbeitsmittelführungen. Die entsprechenden Querschnitte und die Abstände sind denjenigen der Spaltöffnungen durch an den Peripherien verteilte Sicken in den Arbeitsmittelführungen geometrisch optimal angepasst.

Die Klammern wie auch die Arbeitsführungen sind im Bedarfsfall betriebs- und revisionsfreundlich auswechselbar.

Es wird eine höhere Wärmespeicherdichte eingestellt, da das dampfförmige Arbeitsmittel zeitlich bevorzugt in der Längsausdehnung des Wärmespeichers transportiert werden kann. Die Arbeitsmittelführungen können ebenfalls Vliesschichten enthalten, die jedoch von geringerer Dichte der Faservliesstoffe als in den Vliesschichten der Fließböden sind. Die auf den Transportweg und die Wärmeraumdichte bezogene Speicherleistung wird dadurch optimal.

Die Vliesschichten (13; 13') können aus einer Packung von Granulaten bestehen, die sich entweder aus Kompositadsorbentien mit Salzhydraten als Aktivkomponente oder silikatischen mikroporösen Sorbentien vom Zeolithtyp oder mikroporösen und mesoporösen Sorbentien vom Typ der Metallophosphate, Alumophosphate sowie Silikoalumophosphate zusammensetzen.

An Stelle von mikroporösen Sorbentien vom Zeolithtyp kann auch Aktivkohle oder eine Mischung aus Zeolith und Aktivkohle eingesetzt werden.

In einer Abänderung der Erfindung bestehen die Arbeitsmittelführungen aus strangprofilartigen zwei- oder mehrzügigen Elementen, die mit den Wärmeträgerrohren runden oder elliptischen Querschnitts oder mit rechtkantförmigen Wärmeträgerprofilen materialschlüssig vereinigt sind. Zwischen dem Rohrboden und dem Fließboden ist das innerhalb der Vliesschicht befindliche Material der Arbeitsmitelführungen gänzlich oder teilweise abgetragen, wodurch diese in die Vliesschicht geöffnet sind.

Die Arbeitsmittelführungen der strangprofilartigen zwei- oder mehrzügigen Elemente können Ausnehmungen anstelle der Öffnungen zwischen den Rohrböden und den Fließböden besitzen. Diese werden durch eine spanabhebende Formgebung aus den Profilen hergestellt. In einer weiteren Abänderung werden in einem zylindrischen Mantel gegebenenfalls drei Wärmeträgerrohre und in einem rechtkantförmigen Mantel womöglich vier Wärmeträgerrohre gebündelt zusammengefasst. In und nur innerhalb der Ebene der Rohrböden sind die Wärmeträgerrohre außerhalb ihrer Peripherien und innerhalb der Mäntel mit Verschlüssen versehen, auch in deren axialen Bereichen. Lediglich die Mäntel sind mit den Rohrböden formschlüssig fest verbunden. In der Ebene der Fließböden, die ebenfalls Verschlüsse aufweisen, bleiben die axialen Bereiche innerhalb und nur innerhalb dieser Ebene von diesen ausgespart. Zwischen beiden Ebenen befinden sich Vliesschichten.

Das dampfförmige Arbeitsmittel durchdringt die Vliesschichten und gelangt in die Längsspalte zwischen den Wärmeträgerrohren ein, die bei der gegenseitigen Berührung zwischen den Rohrperipherien eingestellt werden. Das Arbeitsmittel tritt durch die von den Verschlüssen ausgesparten axialen Bereiche der Fließböden und somit in die Sorbensschüttung vor. Zusätzliche oder aus einem weiteren Material gestaltete Arbeitsmittelführungen können so entfallen.

In einer weiteren Abänderung bilden Rollprofile innerhalb eines Rohrbodens unter Verwendung eines Durchtritts und einer Verpressung innerhalb eines Fließbodens die Wärmeträgerprofile aus. Ein Verschluss im Rohrboden begrenzt einen Längsspalt, der mit der Vliesschicht in Verbindung steht. Der Verschluss besteht zweckmäßig aus einer Vergussmasse. Es wird erreicht, dass sowohl das Wärmeträgerprofil als auch die Arbeitsmittelführung aus einem einzigen Zuschnitt eines Flachmaterials (Bleches) fertigungsgünstig allein durch Rollformen hergestellt wird.

Auch werden aus einem einzigen Zuschnitt eines Flachmaterials Wärmeträgerrohre und Wärmeträgerprofile durch einstufiges Rollformen ausgebildet. Materialgleiche Fahnen aus Flachmaterial formen die Arbeitsmittelführungen mit ihren Öffnungen zwischen liegend in beiden Ebenen von den Rohrböden und den Fließböden innerhalb der Vliesschichten. Verschlüsse gewährleisten die Dichtheit der Wärmeträgerrohre und der Wärmeträgerprofile innerhalb der Rohrböden. Die Fahnen sind mit ihren Spaltbildungen weitgehend dicht auf den Fließböden an die Spaltöffnungen angesetzt und in diese gerichtet Es wird erreicht, dass sowohl die Wärmeträgerprofile als auch die Arbeitsmittelführungen fertigungsgünstig herstellbar sind.

Die beschriebenen Anordnungen der Rohrböden und Fließböden mit allen übrigen Einzelheiten zur Führung des Arbeitsmittels sind Vorrichtungen, die um eine mittlere Querausdehnung gespiegelte Anordnungen gemäß den in den Schriften DE 199 63 322 A1 und US 6,672,103 B1 beschriebenen Wärmespeichern darstellen und diese zweckdienlich ergänzen.

Auch stellen besondere Ausgestaltungen des Wärmespeichers Vorrichtungen von übereinander benachbart angeordneten Rohrböden dergestalt dar, dass die Wärmeträgerrohre oder -profile mit nur einem darunter angeordneten Fließboden ausgestattet sind, jedoch mit allen übrigen der beschriebenen Einzelheiten auch Tauchrohre oder Tauchprofile in Form von koaxialen oder außermittigen Anordnungen darstellen. Diese Ausführungen mit massesparendem Materialeinsatz nur eines Fließbodens sind besonders für kleinere Wärmespeicher geeignet.

Die Sorbensschüttung kann auch portionsweise in aus Metalldraht bestehende sackartige Gebinde aufgeteilt und in den Wärmespeicher zwischen einer verminderten Anzahl von Warmeträgerrohren oder -profilen eingebracht werden. Der Füllungsanteil an Sorbens erhöht sich innerhalb des zusätzlichen Freiraumes. Die Wärmeleitung innerhalb des Wärmespeichers wird infolge Bildung von Wärmebrücken durch besseren Wärmekontakt zwischen den Gebinden gemäß der Anmeldung DE 10 2004 059 098.2 erhöht. Es versteht sich auch, dass Tanks als Gefäße für die Verdampfung und Kondensation des Arbeitsmittels im Sinne einer Gestaltung von kompakten Wärmespeichern mit diesen vereinigt sein können.

Die Erfindung wird durch Beispiele näher erläutert, ohne sich auf die bereits beschriebenen Anliegen der Erfindung allein zu beschränken. In den zugehörigen Figuren zeigen:
- Fig. 1:: Einen Wärmespeicher nach dem Stand der Technik; im Schnitt
- Fig. 2:: Zwei benachbarte Böden des Wärmespeichers
- Fig. 3:: Ausgestaltungen von Wärmeträgerrohren; im Schnitt zwischen zwei benachbarten Böden

- Fig. 4:: Wärmeträgerprofile

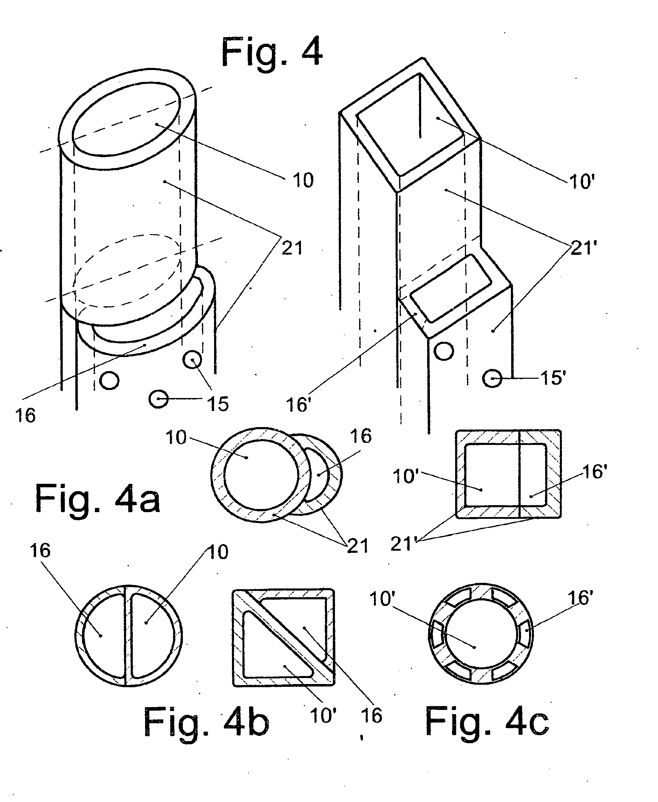

- Fig. 4, a - c:: Ausgestaltungen von Wärmeträgerprofilen, im Schnitt zwischen den Böden nach Fig. 4

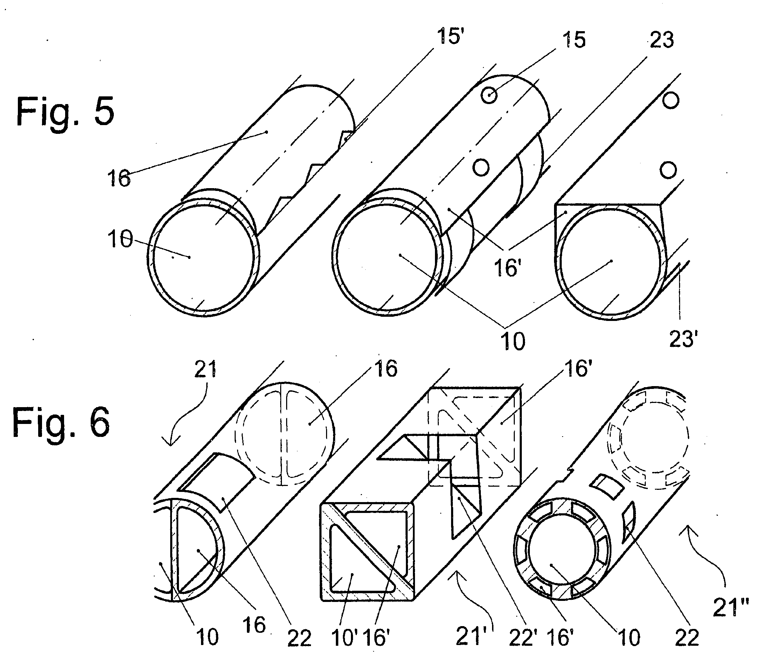

- Fig. 5:: Ausgestaltungen von Wärmeträgerrohren
- Fig. 6:: Ausgestaltungen von Wärmeträgerprofilen

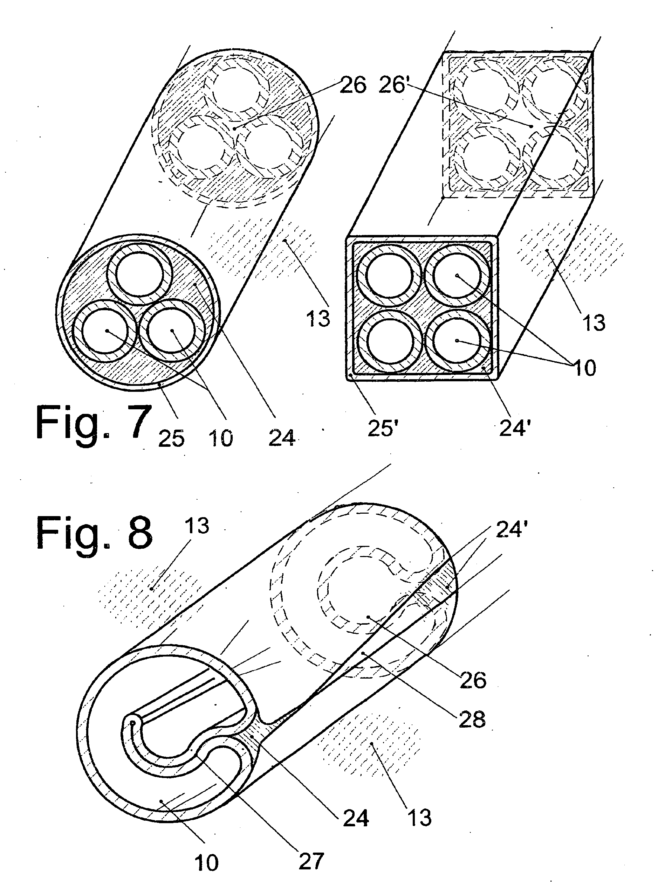

- Fig. 7:: Gebündelte Wärmeträgerrohre und -profile
- Fig. 8:: Ein Rollprofil

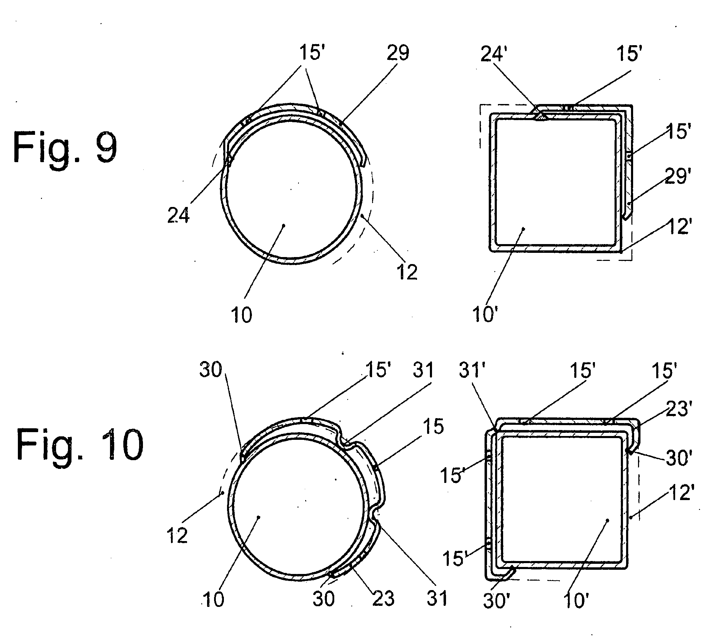

- Fig. 9:: Weitere rollgeformte Profile
- Fig. 10:: Klammerförmige Gestaltungen für Wärmeträgerrohre und -profile.

Die Erfindung soll anhand von Ausführungsbeispielen näher beschrieben werden, ohne sich auf diese Beispiele zu beschränken.

### Ausführungsbeispiele

### Beispiel 1

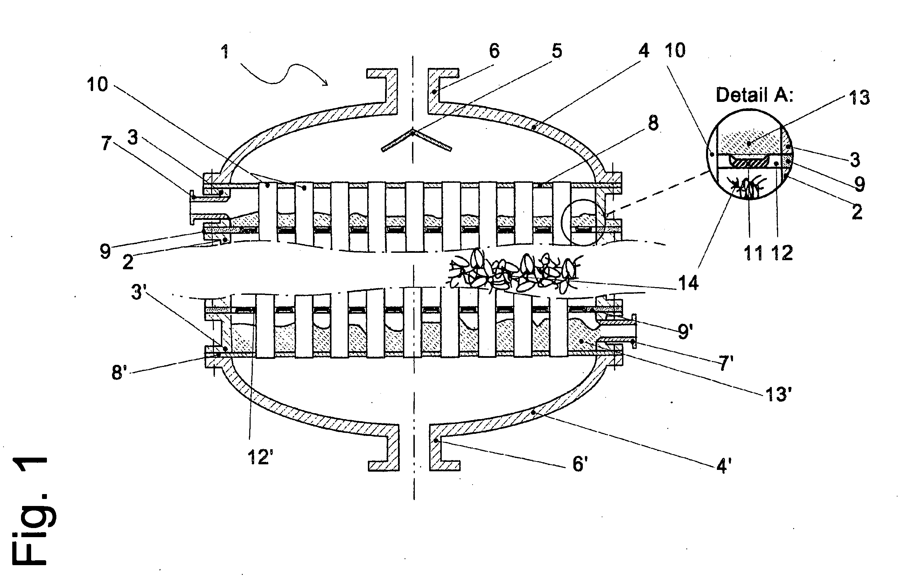

Unter Bezug auf Fig. 1 besteht der Wärmespeicher 1 aus einem Rohrmantel 2, an den sich mindestens in einer vertikal ausgerichteten Anordnung der Schuss 3 und der Schuss 3' für das Arbeitsmittel anschließen. Im Oberteil des Rohrmantels 2 wird der Schuss 3 durch einen Rohrboden 8 und tiefer gelegen durch einen Fließboden 9 und entsprechend im Unterteil der Fließboden 9' durch einen darunterliegenden Rohrboden 8' begrenzt.

Oberhalb des Schusses 3 befindet sich die Kopfhaube 4 mit dem Wärmeträgerzulauf 6 und mit dem zugehörigen Verteiler 5. Unterhalb des Schusses 3' ist die Bodenhaube 4' mit dem Wärmeträgerablauf 6' angebracht.

Aus dem Schuss 3 führt der Arbeitsmittelablauf 7, in den Schuss 3' - entsprechend der Arbeitsmittelzulauf 7'.

In der Ausführung des Wärmespeichers 1 als Rohrbündelwärmeaustauscher mit zwei Rohrböden 8; 8' sind die Wärmeträgerrohre 10 fest in die beiden Rohrböden 8; 8' und benachbart in der Nähe der Fließböden 9; 9' eingebunden und führen durch diese hindurch. Innerhalb der Fließböden 9; 9' und den Wärmeträgerrohren 10 werden ringspaltartig die Spaltöffnungen 12; 12' ausgebildet.

Im Inneren des Wärmespeichers 1 befindet sich im Raum zwischen den Fließböden 9; 9' und den Wärmeträgerrohren 10 die Sorbensschüttung 14, die mit den Spaltöffnungen 12; 12' in Verbindung steht. Bei einem Beladevorgang des Wärmespeichers 1 wird durch den Wärmeträgerzulauf 6 über die Wärmeträgerrohre 10 dem Wärmespeicher 1 vermittels des Wärmeträgers eine auf einem höheren Temperaturniveau befindliche Prozesswärme zugeführt. Nach Eintrag eines Teils dieser Prozesswärme in den Wärmespeicher 1 verlässt der Wärmeträger den Speicher auf einem niedrigeren Temperaturniveau wieder über den Wärmeträgerablauf 6'. Gleichzeitig werden auf den Fließböden 9; 9' die Vliesschichten 13; 13' aus Faservliesstoff aufgeheizt. Diese übernehmen den Transport des bereits aus der Sorbensschüttung 14 verdampften bzw. anteilig im Faservliesstoff auch kondensierten Arbeitsmittels in den Querrichtungen des Wärmespeichers 1. Es erfolgt ein intensiver Wärmeausgleich. Das verdampfte Arbeitsmittel gelangt über die Spaltöffnungen 12; 12' aus der Sorbensschüttung 14 in den Arbeitsmittelablauf 7 oder auch den Arbeitsmittelablauf 7' und wird von dort ständig einem Kondensator zugeführt. Es wird hier eine Prozessführung im Kreuz - bzw. Querstromprinzip für den Wärmeausgleich gewährleistet.

Umgekehrt übernehmen die Vliesschichten 13; 13' über den Arbeitsmittelablauf 7' und den Arbeitsmittelzulauf 7 beim Entladevorgang des Wärmespeichers 1 den Transport des aus dem Speicher verdampfenden und bereits anteilig in den Vliesschichten kondensierten Wärmeträgers.

Bei einer reinen Gegenstrom-Prozessführung tritt das Arbeitsmittel über den Arbeitsmittelzulauf 7' in den Wärmespeicher ein und über den Arbeitsmittelablauf 7 aus. Der Arbeitsmittelzulauf 7' und der Arbeitsmittelablauf 7 vertauschen ihre Funktionsweise. Die drei Möglichkeiten der Prozessführung genügen den bekannten technischen Vor- und Nachteilen der Gestaltung der Strömungsführung und unterliegen den dazugehörenden Optimierungskriterien.

Die aufgebördelten Ränder der Fließböden 9; 9' mit den dazwischen befindlichen kanalförmigen Fließvertiefungen 11 verhindern in jedem Fall, dass etwa die Fließböden 9; 9' bedeckende Flieβsträhnen noch nicht verdampften und bereits teilkondensierten Arbeitsmittels unmittelbar in die Sorbensschüttung 4 eindringen bzw. in diese zurücklaufen. Ein direkter, das Sorbens schädigender Eintritt von Tropfen in die Schüttung wird abgewendet.

Nach dem Stand der Technik sind im Wärmespeicher vor allem bei einer Maßstabsvergrößerung ein räumlich und besonders in Längsrichtung ausgedehnter und gleichverteilter sowie zeitlich ausreichend schnell verlaufender Stoff- und Wärmeausgleich noch nicht gewährleistet Eine erwünscht sprungartig verlaufende Stufencharakteristik der Ausgleichsvorgänge wird noch nicht ausreichend eingestellt.

### Beispiel 2

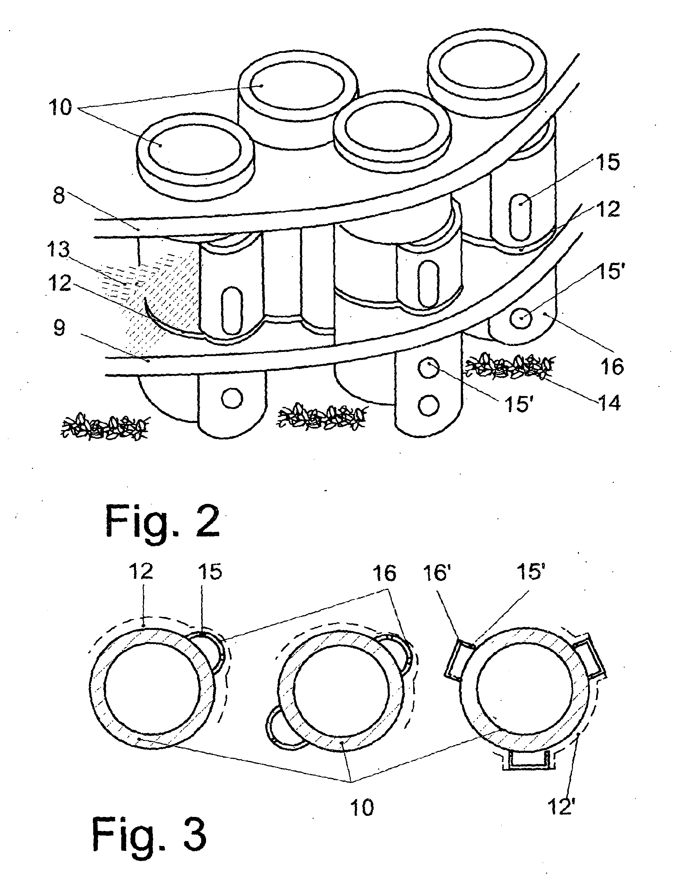

Unter Bezug auf Fig. 2 ist mindestens der Kopfteil des Wärmespeichers 1 oberhalb des Rohrmantels 2, analog wie in Fig. 1, mit dem Rohrboden 8, dem Fließboden 9, der Vliesschicht 13, den Wärmeträgerrohren 10 und der Sorbensschüttung 14 versehen. Zwischen dem Rohrboden 8 und dem Fließboden 9 werden Arbeitsmittelführungen 16 durch die formperforierten Spaltöffnungen 12 hindurchgeführt. Die Arbeitsmittelführungen 16 besitzen zwischen dem Rohrboden 8 und dem Fließboden 9 die Öffnungen 15, die in die Vliesschicht 13 gerichtet sind. Unterhalb des Fließbodens 9 stehen die Öffnungen 15' mit der Sorbensschüttung 14 in Verbindung.

Das verdampfende bzw. kondensierende Arbeitsmittel wird innerhalb der Vliesschicht 13 durch die Öffnungen 14 geführt. Die Öffnungen 15 vermitteln die Führung des dampfförmigen Arbeitsmittels zwischen den Arbeitmittelführungen 16 und der Sorbensschüttung 14.

Die Arbeitsmittelführungen 16 sind nicht zwangsläufig flüssigkeits- und dampfdicht in die Spaltöffnungen 12 eingepasst. Die Spaltöffnungen 12 unterschreiten in ihren quergerichteten Abmessungen die Korngrößen des Sorbens innerhalb der Sorbensschüttung 14.

Es wird eine höhere räumliche Wärmespeicherdichte eingestellt, da der zur Verfügung stehende und durch den Rohrmantel 2 umschlossene Raum zeitlich und örtlich optimal vom Arbeitsmittel in den Quer- und Längsrichtungen des Wärmespeichers 1 durchdrungen wird.

### Beispiel 3

Gemäß Fig. 3 bestehen die Arbeitsmittelführungen mit ihren Öffnungen 15; 15' analog Beispiel 2 und Fig. 2 aus halbschalenartigen Elementen, den Arbeitsmittelführungen 16 oder U - profilartigen Elementen, den Arbeitmittelführungen 16'.

Die Arbeitsmittelführungen 16; 16' sind seitlich und ein- bis dreizügig getrennt an die Wärmeträgerrohre 10 angepasst und nicht mit diesen materialschlüssig vereinigt.

Die Arbeitsmittelführungen 16; 16' befinden sich federnd verklemmt und mindestens reibschlüssig in den Spaltöffnungen 12; 12'.

Die schalen- oder U-profilartigen Elemente ermöglichen die Anpassung von kommerziell verfügbaren Rohrbündelwärmeaustauschern an die beschriebenen Arbeitsmittelführungen zum Zwecke der Wärmespeicherung.

### Beispiel 4

Unter Bezug auf Fig. 3 enthalten die Arbeitsmittelführungen 16; 16' ebenfalls Vliesschichten 13', jedoch von einer geringeren Dichte der Faservliesstoffe als in den Vliesschichten 13 des Beispiels 3.

Zusätzliche Vliesschichten in den Arbeitsmittelführungen 16; 16' verhindern in den Startphasen des Wärmespeichers 1 und bei einem rauhen praxisbezogenem Betrieb ein Hindurchlaufen des unter Umständen nur teilverdampften oder nur teilkondensierten flüssigen Arbeitsmittels durch die Arbeitsmittelführungen 16; 16' in den Sumpf des Wärmespeichers 1.

### Beispiel 5

Unter Bezug auf Fig. 4a - 4c bestehen die Arbeitsmittelführungen 16; 16' aus strangprofilartigen zwei- oder mehrzügigen Elementen, die mit den Wärmeträgerrohren 10 runden oder elliptischen Querschnitts oder den rechtkantförmigen Wärmeträgerprofilen 10' materialschlüssig vereinigt sind. Zwischen dem Rohrboden 8; 8' und dem Fließboden 9; 9' ist das innerhalb der Vliesschicht 13 befindliche Material an den Peripherien der Arbeitsmittelführungen 16; 16' gänzlich oder teilweise abgetragen. Strangförmige Elemente ermöglichen über Stege vorteilhaft die Ausbildung von wärmeleitenden Brücken in den zusammengefügten Wärmeträger - und Arbeitsmittelführungen.

### Beispiel 6

Gemäß Fig. 5 und Beispiel 2 besitzen die halbschalenartigen oder U-profilartigen Elemente der Arbeitsmittelführungen 16; 16' anstelle der runden Öffnungen 15 die zahnartigen Öffnungen 15', die zur Hauptachse und in der Längsausdehnung an den längsbegrenzenden Rändern dieser Elemente gestaffelt verlaufen und / oder an diesen Rändern die Klammern 23; 23' für ihre Befestigung aufweisen, wobei die Wärmeträgerrohre 10 zumindest teilweise von diesen Klammern 23; 23' federnd umschlossen werden.

Die zahnartigen Öffnungen ermöglichen das Strömen des dampfförmigen Arbeitsmittels seitlich abzweigend von den Wärmeträgerrohren 10 in einer tangentialen Richtung. Die Klammern 23; 23' erhöhen die Revisionsfreundlichkeit des Wärmespeichers durch die ermöglichte Auswechselbarkeit der Arbeitsmittelführungen 16; 16'.

### Beispiel 7

Unter Bezug auf die Figuren 6 und 4 sind die Arbeitsmittelführungen 16; 16' der strangprofilartigen zwei- oder mehrzügigen Elemente mit Ausnehmungen 22; 22' anstelle der Öffnungen 15; 15' zwischen den Rohrböden 8 und den Fließböden 9 gemäß Fig. 2 versehen.

Die größeren Öffnungen der Ausnehmungen 22; 22' ermöglichen eine bessere Durchdringung unterschiedlich dichter Vliesschichten gemäß Beispiel 4 auf den Fließböden 9; 9' mit denen der Arbeitsmittelführungen 16; 16'.

### Beispiel 8

Unter Bezug auf Fig. 7 werden in einem zylindrischen Mantel 25 drei Wärmeträgerrohre 10 und in einem rechtkantförmigen Mantel 25' vier Wärmeträgerrohre 10' gebündelt zusammengefasst. Nur innerhalb der Ebene der Rohrböden 8 sind die Wärmeträgerrohre 10; 10', außerhalb ihrer Peripherien und innerhalb der Mäntel 25; 25', auch in deren axialen Bereichen, mit den Verschlüssen 24; 24' versehen. Die Mäntel 25, 25' sind mit den Rohrböden 8; 8' fest verbunden. In der Ebene der Fließböden 9; 9', die ebenfalls die Verschlüsse 24; 24' aufweisen, bleiben die axialen Bereiche innerhalb und nur innerhalb dieser Ebene von Verschlüssen 24; 24' ausgespart. Zwischen beiden Ebenen befinden sich die Vliesschichten 13, 13'.

Das in den Vliesschichten 13; 13' im Entladungsvorgang des Wärmespeichers 1 verdampfende Arbeitsmittel dringt in die Längsspalte zwischen den Wärmeträgerrohren 10; 10', die bei deren gegenseitiger Berührung eingestellt werden. Das Arbeitsmittel gelangt durch die von den Verschlüssen ausgesparten axialen Bereiche der Fließböden 9; 9' und demzufolge in die Sorbensschüttung 14 und wird hier adsorbiert. Im Beladungsvorgang wird andererseits das desorbierte und dampfförmige Arbeitsmittel von den Längsspalten aufgenommen. Die Korngrößen des Sorbens innerhalb der Sorbensschüttung übersteigen mindestes die Querausdehnung der Längsspalte.

Zusätzliche sowie auch mit weiteren Materialien gestaltete Arbeitsmittelführungen 16; 16' können entfallen.

### Beispiel 9

Gemäß Fig. 9 bildet ein Rollprofil unter Verwendung eines Durchtritts 26 und einer Verpressung 27 innerhalb der Ebenen eines Rohrbodens 8; 8' und entsprechend eines Fließbodens 9; 9' ein Wärmeträgerprofil 10' aus. Der Verschluss 24 begrenzt einen Längsspalt 28, der mit den Vliesschichten 13; 13' in Verbindung steht.

Es wird erreicht, dass sowohl das Wärmeträgerprofil 10' als auch die Arbeitsmittelführung 16' fertigungsgünstig durch Rollformen aus einem einzigen Zuschnitt eines Flachmaterials hergestellt wird. Der Verschluss 24' kann entfallen; er besitzt jedoch vorteilhaft eine fixierende Funktion der Arbeitsmittelführungen 16; 16' in den Vliesschichten 9; 9.

### Beispiel 10

In Abwandlung von Fig. 9 wird aus einem einzigen Zuschnitt eines Flachmaterials ein annähernd S-förmiges Rollprofil dergestalt durch Rollformen ausgestaltet, dass zwei etwa kreisabschnittförmige und ungleich große Segmente entstehen, die in ihrem Inneren einen sehnenartigen, angenähert eben profilierten Steg einschließen und die mit ihren peripheren Abrundungen in zwei etwa halbkreisförmige periphere Gebilde übergehen. Das größere Gebilde stellt ein genähert halbrundförmiges Wärmeträgerprofil 10' dar, das flüssigkeits- und gasdicht in den Rohrböden 8; 8' mit einer peripher etwa halbkreisförmigen Begrenzung eingesetzt ist. Die Verschlüsse 24; 24' begrenzen die Länge des Wärmeträgerprofils lediglich in Nähe der Rohrböden 8; 8' in Gestalt einer kurzen Längsnaht, insgesamt einen offenen Längsspalt 28 ausformend. Das kleinere Gebilde stellt eine innere Arbeitsmittelführung (16') dar. Zwei rollgeformte Fahnen 29; 29' befinden sich lediglich oberhalb bzw. unterhalb der Fließböden 9; 9'. Diese sind jedoch nicht zwangsläufig dicht mit ihrer oberen Peripherie in die Fließböden 9; 9' eingebunden, Lediglich mit der spaltartigen Austrittsöffnung der Fahnen 29; 29' ist diese in die Vliesschichten 13; 13' über die Spaltöffnungen 12; 12' in die Sorbensschüttung 14 gerichtet.

Diese Gestaltung dieses Rollprofils stellt in ihrer komplizierteren Form eine Vorzugsvariante für die Herstellung von Wärmeträgerrohren 10' größerer Abmessungen dar, die mit Arbeitsmittelführungen 16;16' vereinigt sind. Vorgezogen wird diese Ausführung für Wärmespeicher 1 mit einem großen Höhen -/ Durchmesser-Verhältnis von mindestens 5.

### Beispiel 11

Unter Bezug auf Fig. 9 werden aus einem einzigen Zuschnitt eines Flachmaterials Wärmeträgerrohre 10 und Wärmeträgerprofile 10' durch Rollformen ausgebildet. Materialgleiche Fahnen 29; 29' aus dem Flachmaterial formen die Arbeitsmittelführungen 16; 16' mit den Öffnungen 15; 15' zwischenliegend in beiden Ebenen inmitten der Rohrböden 8; 8' und der Fließböden 9; 9' und innerhalb der Vliesschichten 13 liegend aus. Die Verschlüsse 24; 24' gewährleisten die Dichtheit der Wärmeträgerrohre 10 und der Wärmeträgerprofile 10' innerhalb der Rohrböden 8; 8'. Die Fahnen 29; 29' sind an die Spaltbildungen weitgehend dicht auf den Fließböden 9; 9' an die Spaltöffnungen 12; 12' angeformt.

Es wird erreicht, dass sowohl das Wärmeträgerprofil 10 als auch das Wärmeträgerprofil 10' wie auch die Arbeitsmittelführungen 16; 16' fertigungsgünstig aus ebenen Materialzuschnitten herstellbar sind.

### Beispiel 12

Die Arbeitsmittelführungen 16; 16' werden gemäß Fig. 10 aus einem federelastischen Material in Form der Klammern 23; 23' an die Wärmeträgerrohre 10 oder die Wärmeträgerprofile 10' innerhalb der Ebenen zwischen den Rohrböden 8; 8' und den Fließböden 9; g' angesetzt. Die Rasten 30; 30' gewährleisten den anpassungsfähig festen Sitz der Arbeitsmittelführungen 16; 16'. Die entsprechenden Querschnitte der Abstände sind denjenigen der Spaltöffnungen 12; 12' mit Hilfe von Sicken 27; 27' optimal angepasst.

Die Klammern 23; 23' sind wie in Beispiel 6 im Bedarfsfall betriebsgünstig und revisionsfreundlich auswechselbar.

### Beispiel 13

Die in den Beispielen 2-10 und in den Figuren 2 - 10 beschriebenen Anordnungen der Rohrböden 8; 8' und Fließböden 9; 9' mit allen übrigen Einzelheiten sind Vorrichtungen, die um eine mittlere Querausdehnung gespiegelte Anordnungen gemäß dem in Beispiel 1, Fig.1 beschriebenen Wärmespeicher 1 darstellen.

Bei einer großen Längsausdehnung des Wärmespeichers wird somit die Führung des Arbeitsmittels sowohl von der Kopf- als auch von der Bodenhaube her ermöglicht. Auch horizontale oder geneigte Anordnungen des Wärmespeichers in Abwandlung von Fig. 1 werden vorteilhaft betreibbar. Beide Vliesschichten 13; 13' gewährleisten eine optimale Führung des Arbeitsmitteldampfes quer und längs des Wärmespeichers 1.

### Beispiel 14

Die in den Beispielen 2 - 11 und in den Figuren 2 - 10 beschriebenen Ausgestaltungen der Wärmeträgerführungen 16; 16' des Wärmespeichers 1 stellen besonders ausgestaltete Vorrichtungen von übereinander benachbart angeordneten Rohrböden 8; 8' dergestalt dar, dass die Wärmeträgerrohre 10 oder die Wärmeträgerprofile 10' mit nur einem darunter angeordneten Fließboden 9 ausgestattet sind, jedoch mit allen übrigen der beschriebenen Einzelheiten Tauchrohre oder Tauchprofile in Form von koaxialen oder außermittigen Anordnungen gemäß den Schriften DE 199 63 322 A1 und US 6,672,103 B1 verkörpern.

Diese Ausführungen mit massesparendem Materialeinsatz nur eines Fließbodens 9 ist für die Ausgestaltung kleinerer Wärmespeicher zweckdienlich.

### Beispiel 15

Die Sorbensschüttung 14 wird portionsweise in aus Metalldraht bestehende sackartige Gebinde aufgeteilt und in den Wärmespeicher 1 zwischen einer verminderten Anzahl von Warmeträgerrohren 10 oder Warmeträgerprofilen 10' eingebracht. Der Füllungsanteil an Sorbens erhöht sich innerhalb eines zusätzlichen Freiraumes. Die Wärmeleitung innerhalb der Sorbensschüttung 14 wird infolge Bildung von darüber hinaus geschaffenen Wärmebrücken infolge besseren Wärmekontaktes zwischen den Gebinden erhöht.

### Beispiel 16

Der Wärmespeicher 1 besitzt gemäß vorstehender Beispiele im Sinne eines Kompaktwärmespeichers nach DE 199 63 322 A1 mindestens einen Tank für die Verdampfung und mindestens einen für die Kondensation des Arbeitsmittels und stellt aus beiden, gleichartig gestaltet, eine gemeinsame Vorrichtung dar.

### Beispiel 17

Der Wärmespeicher 1 wird in Abwandlung der Beispiele 1 bis 16 in einer horizontalen bzw. schräg dazu geneigten Anordnung mit horizontal oder schräg ausgerichteten Rohrböden 8; 8', Fließböden 9; 9' und Vliesschichten 13; 13' eingesetzt.

### Bezugszeichenliste

- 1: Wärmespeicher
- 2: Rohrmantel
- 3, 3': Schuss
- 4: Kopfhaube
- 4': Bodenhaube
- 5: Verteiler
- 6: Wärmeträgerzulauf
- 6': Wärmeträgerablauf
- 7: Arbeitsmittelablauf
- 7': Arbeitsmittelzulauf
- 8, 8': Rohrboden
- 9, 9': Fließboden
- 10: Wärmeträgerrohr
- 10': Wärmeträgerprofil
- 11: Fließvertiefungen
- 11': Fließvertiefung
- 12, 12': Spaltöffnung
- 13, 13': Vliesschicht
- 14: Sorbensschüttung
- 15, 15': Öffnung
- 16, 16': Arbeitsmittelführung
- 21, 21', 21": Profil
- 22, 22': Ausnehmung
- 23, 23' .: Klammer
- 24, 24': Verschluss
- 25, 25': Mantel
- 26, 26': Durchtritt
- 27: Verpressung
- 28: Längsspalt
- 29,29: Fahne'
- 30, 30': Raste
- 31,31': Sicke

## Patentansprüche

1. Wärmespeicher hoher Speicherdichte nach dem Sorptionsprinzip, wobei mit Hilfe eines verdampfbaren und wieder verflüssigbaren Arbeitsmittels, bevorzugt Wasser, in einem Entladevorgang ein durch Verdampfen erzeugter Arbeitsmitteldampf an einem mikroporösen Sorbens adsorbiert und die entstehende Sorptionswärme zum überwiegenden Anteil aus dem Wärmespeicher wieder herausgeführt wird, und in einem Ladevorgang das durch nachfolgendes Kondensieren verflüssigte Arbeitsmittel von dem mikroporösen Sorbens desorbiert, die über der Verdampfungswärme des Arbeitsmittels liegende Überschusswärme als in den Speicher eingebrachte Desorptionswärme im Sorbens gespeichert wird und die vorliegenden thermodynamischen Systeme sowohl geschlossene als auch halboffene sind, der Wärmespeicher (1) einen Rohrmantel (2), mindestens einen Schuss (3; 3'), einen Rohrboden (8; 8') und einen Fließboden (9; 9') umfasst, Wärmeträgerrohre (10) fest in mindestens einem der Rohrböden (8; 8') eingebunden sind und durch einen Fließboden (9; 9') hindurchgehen und auf mindestens einem Fließboden (9; 9') um durch diesen hindurchführende Wärmeträgerrohre (10) spaltartige Öffnungen ausgebildet werden, die mit der Sorbensschüttung (14) in Verbindung stehen, **dadurch gekennzeichnet, dass** sich zwischen den Wärmeträgerrohren (10) oder Wärmeträgerprofilen (10') auf den Fließböden (9; 9') kanalartige Fließvertiefungen (11; 11') befinden, die von den Vliesschichten (13; 13') durchdrungen sind, und die Arbeitsmittelführungen (16; 16') durch gegebenenfalls angepasst ausgeformte oder formperforierte Spaltöffnungen (12; 12') hindurchgeführt sind, wobei diese nicht zwangsläufig materialschlüssig eingepasst sind, und sich die Arbeitsmittelführungen (16;16') in unmittelbarer Berührung mit den Wärmeträgerrohren (10) oder Wärmeträgerprofilen (10') befinden.

2. Wärmespeicher nach Anspruch 1, **dadurch gekennzeichnet, dass** die Arbeitsmittelführungen (16;16') zwischen den Rohrböden (8. 8') und den Fließböden (9;9') in die Vliesschicht (13) gerichtete Öffnungen (15) besitzen und unterhalb dieser Fließböden (9; 9') die Öffnungen (15') in die Sorbensschüttung (14) gerichtet sind.

3. Wärmespeicher nach Anspruch 1 oder 2, **dadurch gekennzeichnet, dass** die Arbeitsmittelführungen (16; 16') aus halbschalenartigen Elementen, den Arbeitsmittelführungen (16) oder U- bzw. S-profilartigen Elementen, den Arbeitmittelführungen (16') bestehen, die an der Peripherie der Wärmeträgerrohre (10) ein- bis dreizügig gelehnt, an diese angepasst und nicht zwangsläufig mit diesen materialschlüssig vereinigt sind, und sich dabei mindestens federnd verklemmt und reibschlüssig in den Spaltöffnungen (12; 12') befinden.

4. Wärmespeicher nach Anspruch 3, **dadurch gekennzeichnet, dass** die halbschalenartigen oder U bzw. S-profilartigen Elemente der Arbeitsmittelführungen (16; 16') anstelle der Öffnungen (15) etwa zahnartige Öffnungen (15') aufweisen, die zur Hauptachse und in der Längsausdehnung an den längsbegrenzenden Rändern dieser Elemente parallel verlaufen und / oder an diesen Rändern die Klammern (23; 23') aufweisen, die die Wärmeträgerrohre (10) zumindest teilweise umschließen.

5. Wärmespeicher nach einem der Ansprüche 1 bis 4, **dadurch gekennzeichnet, dass** die Arbeitsmittelführungen (16; 16)
a) aus einem federelastischen Material in Form der Klammern (23; 23) an die Wärmeträgerrohre (10) oder Wärmeträgerprofile (10') innerhalb den Ebenen zwischen den Rohrböden (8; 8') und den Fließböden (9; 9') angesetzt sind, die Sicken (27; 27') und die Rasten (30; 30') den Sitz der Arbeitsmittelführungen (16; 16') über den Spaltöffnungen (12;12') gewährleisten
oder
b) aus strangprofilartigen zwei- oder mehrzügigen Elementen bestehen, die mit den Wärmeträgerrohren (10) eines runden oder elliptischen Querschnitts oder den rechtkantförmigen Wärmeträgerprofilen (10') materialschlüssig vereinigt sind und das innerhalb der Vliesschicht (13) befindliche Material der Arbeitsmittelführungen (16; 16') zwischen den Rohrböden (8 ;8') und den Fließböden (9;9') gänzlich oder teilweise abgetragen ist.

6. Wärmespeicher nach Anspruch 5, **dadurch gekennzeichnet, dass** die Arbeitsmittelführungen (16; 16') der strangprofilartigen zwei- oder mehrzügigen Elemente zwischen den Rohrböden (8; 8') und den Fließböden (9; 9') anstelle der Öffnungen (15; 15') mit Ausnehmungen (22; 22') versehen sind.

7. Wärmespeicher nach einem der Ansprüche 1 bis 6, **dadurch gekennzeichnet, dass** in einem zylindrischen Mantel (25) gegebenenfalls drei Wärmeträgerrohre (10) oder in einem rechtkantförmigen Mantel (25') gegebenenfalls vier Wärmeträgerrohre (10') gebündelt zusammengefasst sind, die innerhalb der einen Ebene der Rohrböden (8) die Wärmeträgerrohre (10; 10'), außerhalb ihrer Peripherien und innerhalb der Mäntel (25; 25') auch in deren axialen Bereichen mit den Verschlüssen (24; 24') versehen sind, die Mäntel (25, 25') mit den Rohrböden (8) fest verbunden sind, und in der Ebene der Fließböden (9; 9') ebenfalls die Verschlüsse (24; 24') auftreten, die axialen Bereiche innerhalb und nur innerhalb dieser zweiten Ebene von diesen Verschlüssen (24; 24') ausgespart bleiben, sowie dass sich zwischen beiden Ebenen die Vliesschichten (13, 13') befinden.

8. Wärmespeicher nach einem der Ansprüche 1 bis 7, **dadurch gekennzeichnet, dass** an die Stelle der Wärmeträgerrohre (10) Rollprofile treten, die die Wärmeträgerprofile (10') ausbilden und die innerhalb eines Rohrbodens (8; 8') mit einer Verpressung (27) und innerhalb eines Fließbodens (9; 9') mit einem Durchtritt (26) versehen sind, sowie den in einen Längsspalt (28) mündenden und mit der Vliesschicht (13) in Verbindung stehenden Verschluss (24) aufweisen.

9. Wärmespeicher nach Anspruch 8, **dadurch gekennzeichnet, dass** aus einem einzigen Flachmaterialzuschnitt Wärmeträgerrohre (10) und -profile (10') ausgebildet werden, materialgleiche Fahnen (29; 29') die Arbeitsmittelführungen (16; 16') mit den Öffnungen (15; 15') anformen, die sich zwischenliegend in beiden Ebenen zwischen den Rohrböden (8; 8') und Fließböden (9; 9') innerhalb der Vliesschichten (13; 13') befinden und die die Verschlüsse (24; 24') zwischen den Wärmeträgerrohren (10) und -profilen (10') innerhalb der Rohrböden (8; 8') sowie die Fahnen (29; 29') aufweisen, und die mit ihren Spaltbildungen weitgehend dicht auf den Fließböden (9; 9') aufsitzen und in die Spaltöffnungen (12; 12') gerichtet sind.

10. Wärmespeicher nach einem der Ansprüche 1 bis 9, **dadurch gekennzeichnet, dass** die Arbeitsmittelführungen (16; 16') ebenfalls Vliesschichten (13'), jedoch von geringerer Dichte der Vliesstoffe als in den Vliesschichten (13) enthalten.

11. Wärmespeicher nach einem der Ansprüche 1 bis 10, **dadurch gekennzeichnet, dass** abgewandelte Vorrichtungen mit übereinander benachbart angeordneten Rohrböden (8; 8') und die Wärmeträgerrohre (10) oder die Wärmeträgerprofile (10') mit nur einem darunter oder darüber angeordneten Fließboden (9) ausgestattet sind, jedoch mit allen übrigen Einzelheiten Tauchrohre oder Tauchprofile in Form von koaxialen oder außermittigen Anordnungen mit den Arbeitsmittelführungen (16; 16') darstellen.

12. Wärmespeicher nach einem der Ansprüche 1 bis 11, **dadurch gekennzeichnet, dass** die Sorbensschüttung (14) portionsweise in aus Metalldraht bestehende sackartige Gebinde aufgeteilt und in den Wärmespeicher (1) zwischen einer verminderten Anzahl von Wärmeträgerrohren (10) oder Warmeträgerprofilen (10') mit den Arbeitsmittelführungen (16; 16') eingebracht ist.

13. Wärmespeicher nach einem der Ansprüche 1 bis 12, **dadurch gekennzeichnet, dass** dieser als Kompaktwärmespeicher einen Tank sowohl für die Verdampfung als auch für die Kondensation des Arbeitsmittels besitzt und mit beiden vereinigt ist, wobei auch vertikale wie auch horizontal ausgeführte Anordnungen der Wärmeträgerrohre (10), der Fließböden (9; 9') und der Vliesschichten (13, 13') vorgesehen werden.

14. Wärmespeicher nach einem der Ansprüche 1 bis 13, **dadurch gekennzeichnet, dass** die Vliesschichten (13; 13') aus einer Packung von Granulaten bestehen, die sich aus
a) silikatischen mikroporösen Sorbentien vom Zeolithtyp oder mikroporösen und mesoporösen Sorbentien vom Typ der Metallophosphate, Alumophosphate oder Silikoalumophosphate
oder
b) Kompositadsorbentien mit Salzhydraten als Aktivkomponente zusammensetzen.

## Claims

1. A sorption-based heat store with a high storage density with - by means of a vaporisable and reliquefiable working-medium, preferably water - in a discharge process a working medium vapour generated by vaporisation adsorbing to a microporous sorbent and the sorbent heat generated being lead out of the heat store again to a large extent, and in a charge process the working medium liquefied by subsequent condensation desorbing from the microporous sorbent, the excessive heat located above the vaporisation heat of the working medium being stored in the sorbent as desorption heat introduced into the store, and the existing thermodynamic systems being closed as well as half-open systems, the heat store (1) comprising a tube sheathing (2), at least a shell (3; 3'), a tube base (8; 8') and a flow plate (9; 9'), heat carrier tubes (10) being firmly integrated into at least one of the tube bases (8; 8') and passing through a flow plate (9; 9'), and apertures being formed on at least one flow plate (9; 9') around heat carrier tubes (10) leading through said flow plate which apertures are connected with the sorbent bed (14), **characterized in that** between the heat carrier tubes (10) or heat carrier profiles (10') flow channels (11; 11') are located on the flow plates (9; 9'), which are penetrated by the non-woven fibres (13; 13'), and the working medium guides (16; 16') are lead through formed or perforated - as the case may be - apertures (12; 12'), with these being fitted with material fit being non-essential, and the working medium guides (16; 16') are in direct contact with the heat carrier tubes (10) or heat carrier profiles (10').

2. A heat store according to claim 1, **characterized in that** the working medium guides (16; 16') between the tube bases (8; 8') and the flow plates (9; 9') comprise openings (15) directed into the non-woven fibre (13), and that below said flow plates (9; 9') the openings (15') are directed into the sorbent bed (14).

3. A heat store according to claim 1 or 2, **characterized in that** the working medium guides (16; 16') are comprised of concave elements, the working medium guides (16), or U- and/or S-shaped elements, the working medium guides (16'), which abut the heat carrier tubes' (10) periphery in one to three passages, are fitted and connected to them with material fit being non-essential and are located in the apertures (12; 12') resiliently clamped and frictionally engaged.

4. A heat store according to claim 3, **characterized in that** the concave or U- and/or S-shaped elements of the working medium guides (16; 16') instead of the openings (15) comprise approximately tooth-like openings (15') extending parallel to the main axis and in longitudinal extension on the longitudinally limiting borders of said elements and/or comprise on these borders the clamps (23; 23') which at least partially enclose the heat carrier tubes (10).

5. A heat store according to any one of claims 1 to 4, **characterized in that** the working medium guides (16; 16')
a) out of a resilient material in the form of clamps (23; 23') are attached to the heat carrier tubes (10) or heat carrier profiles (10') within the levels between the tube bases (8; 8') and the flow plates (9; 9'), the beads (27; 27') and catches (30; 30') guarantee the seat of the working medium guides (16; 16') above the apertures (12; 12')
or
b) are comprised of extruded profile-type elements with two or multiple passages which are connected by material fit to the heat carrier tubes (10) of round or elliptical section or the cuboidal heat carrier profiles (10'), and the material of the working medium guides (16; 16') located within the non-woven fibre (13) is transferred wholly or in part between the tube bases (8; 8') and the flow plates (9; 9').

6. A heat store according to claim 5, **characterized in that** the working medium guides (16; 16') of the extruded profile-type elements with two or multiple passages between tube bases (8; 8') and the flow plates (9; 9') instead of the openings (15; 15') are provided with recesses (22; 22').

7. A heat store according to any one of claims 1 to 6, **characterized in that** in a cylindrical sheathing (25) - where appropriate - three heat carrier tubes (10) or in a cuboidal sheathing (25') - where appropriate - four heat carrier tubes (10') are bundled, which within one plane of the tube bases (8) of the heat carrier tubes (10; 10'), outside their peripheries and within the sheathings (25; 25') also in their axial regions are provided with the closures (24; 24'), the sheathings (25; 25') are firmly connected with the tube bases (8), and in the plane of the flow plates (9; 9') the closures (24; 24') likewise occur, no closures (24; 24') are provided in the axial regions within and only within said second plane, as well as that the non-woven fibres (13; 13') are placed between both planes.

8. A heat store according to any one of claims 1 to 7, **characterized in that** the heat carrier tubes (10) are replaced by rolled profiles, which define the heat carrier profiles (10') and which are provided with a pressing (27) within a tube base (8; 8') and with a passage (26) within a flow plate (9; 9') and comprise the closure (24) leading to a longitudinal gap (28) and connected with the non-woven fibre (13).

9. A heat store according to claim 8, **characterized in that** heat carrier tubes (10) and heat carrier profiles (10') are shaped from one single flat material cut, flags (29; 29') of same material form the working medium guides (16; 16') with the openings (15; 15'), which are located in both planes between the tube bases (8; 8') and the flow plates (9; 9') within the non-woven fibres (13; 13') and which comprise the closures (24; 24') between the heat carrier tubes (10) and the heat carrier profiles (10') within the tube bases (8; 8') as well as the flags (29; 29') and which with their fissuring rest largely tightly on the flow plates (9; 9') and are directed into the apertures (12; 12').

10. A heat store according to any one of claims 1 to 9, **characterized in that** the working medium guides (16; 16') likewise include non-woven fibres (13') but of lower thickness of the non-woven fabrics than in the non-woven fibres (13).

11. A heat store according to any one of claims 1 to 10, **characterized in that** modified devices are equipped with tube bases (8; 8') located over one another and adjacent to each other and the heat carrier tubes (10) or heat carrier profiles (10') are equipped with only one flow plate (9) located below or above but with all other details constitute immersion tubes or immersion profiles in the form of coaxial or eccentric arrangements with the working medium guides (16; 16').

12. A heat store according to any one of claims 1 to 11, **characterized in that** the sorbent bed (14) is divided in portions in bag-type packages composed of metal wire, and is introduced into the heat store (1) with the working medium guides (16; 16') between a reduced number of heat carrier tubes (10) or heat carrier profiles (10').

13. A heat store according to any one of claims 1 to 12, **characterized in that** said heat store as a compact heat store comprises a tank not only for vaporisation but also for condensation of the working medium and is combined with both with vertical as well as horizontal arrangements of the heat carrier tubes (10), the flow plates (9; 9') and the non-woven fibres (13; 13') being provided as well.

14. A heat store according to any one of claims 1 to 13, **characterized in that** the non-woven fibres (13; 13') are comprised of a package of granular materials which are composed of
a) silicious microporous sorbents of the zeolite type or microporous and mesoporous sorbents of the metallophosphate type, alumophosphate type or silicoalumophosphate type
or
b) composite adsorbents with salt hydrates as an active component.

## Revendications

1. Accumulateur thermique de haute densité de stockage selon le principe de sorption, une vapeur de moyen de travail produit dans un processus de déchargement par évaporation adsorbant à un sorbant microporeux à l'aide d'un moyen de travail évaporable et reliquéfiable, et la chaleur de sorption produite étant de nouveau fait sortir largement de l'accumulateur thermique, et dans un processus de chargement le moyen de travail liquéfié par la condensation suivante désorbant du sorbant microporeux, la chaleur excessive au-dessus du moyen de travail étant stockée dans le sorbant en tant que chaleur de désorption introduit dans l'accumulateur, et les systèmes thermodynamiques existants étant non seulement des systèmes fermés mais aussi des systèmes semi-ouverts, l'accumulateur thermique (1) comprenant une gaine de tube (2), au moins une virole (3; 3'), une plaque tubulaire (8; 8') et une plaque d'écoulement (9; 9'), des tubes caloporteurs (10) étant intégrés fermement dans au moins une des plaques tubulaires (8; 8') et traversant une plaque d'écoulement (9; 9'), et des orifices étant formés sur au moins une plaque d'écoulement (9; 9') autour des tubes caloporteurs (10) passant à travers ladite plaque d'écoulement, lesdits orifices étant solidaires au lit de sorbant (14), **caractérisé en ce qu'**entre les tubes caloporteurs (10) ou profils caloporteurs (10') sur les plaques d'écoulement (9; 9') des canaux d'écoulement (11; 11') sont agencés qui sont pénétrés par des couches non-tissées (13; 13'), et les guidages de moyen de travail (16; 16') sont passés le cas échéant par des orifices (12; 12') conformés ou perforés, lesquels n'étant pas obligatoirement ajustés avec ajustement de matériau, et les guidages de moyen de travail (16; 16') sont en contact direct avec les tubes caloporteurs (10) ou les profils caloporteurs (10').

2. Accumulateur thermique selon la revendication 1, **caractérisé en ce que** les guidages de moyen de travail (16; 16') entre les plaques tubulaires (8; 8') et les plaques d'écoulement (9; 9') comportent des ouvertures (15) dirigées dans la couche non-tissée (13) et qu'au-dessus de ces plaques d'écoulement (9; 9') les ouvertures (15') sont dirigées dans le lit de sorbant (14).

3. Accumulateur thermique selon la revendication 1 ou 2, **caractérisé en ce que** les guidages de moyen de travail (16; 16') sont constitués par des éléments concaves, les guidages de moyen de travail (16), ou des éléments de profilé en U et/ou en S, les guidages de moyen de travail (16') appuient sur la périphérie des tubes caloporteurs (10) avec un à trois passages, sont ajusté à ceux-ci et solidaires avec ceux-ci non pas obligatoirement avec ajustement de matériau, et sont agencés dans les orifices (12; 12') au moins serrés élastiquement et entraînés par friction.

4. Accumulateur thermique selon la revendication 3, **caractérisé en ce que** les éléments concaves ou de profilé en U et/ou en S des guidages de moyen de travail (16; 16') au lieu des ouvertures (15) comportent environ des ouvertures dentiformes (15') qui s'étendent en parallèle à l'axe principal et dans l'extension longitudinale aux bords limitants longitudinalement de ces éléments, et/ou comportent à ces bords les pinces (23; 23') qui enferment les tubes caloporteurs (10) au moins partiellement.

5. Accumulateur thermique selon la revendication 1 à 4, **caractérisé en ce que** les guidages de moyen de travail (16; 16')
a) à partir d'un matériau élastique sous forme des pinces (23; 23') sont rapportés sur les tubes caloporteurs (10) ou les profils caloporteurs (10') dans les plans entre les plaques tubulaires (8; 8') et les plaques d'écoulement (9; 9'), les moulures (27; 27') et les crans (30; 30') garantissent le siège des guidages de moyen de travail (16; 16') au-dessus des orifices (12; 12')
ou
b) comportent des éléments de profil extrudé à deux ou plusieurs passages qui sont solidaires avec ajustement de matériau avec les tubes caloporteurs (10) d'une section ronde ou elliptique ou les profils caloporteurs (10') sous forme d'un parallèlépipède rectangle, et le matériau des guidages de moyen de travail (16; 16') agencé endéans la couche non-tissée (13) est emporté entièrement ou partiellement entre les plaques tubulaires (8; 8') et les plaques d'écoulement (9; 9').

6. Accumulateur thermique selon la revendication 5, **caractérisé en ce que** les guidages de moyen de travail (16; 16') des éléments de profil extrudé à deux ou plusieurs passages entre les plaques tubulaires (8; 8') et les plaques d'écoulement (9; 9') sont équipés des creux (22; 22') au lieu des ouvertures (15; 15').

7. Accumulateur thermique selon la revendication 1 à 6, **caractérisé en ce que** dans une gaine cylindrique (25) le cas échéant trois tubes caloporteurs (10) ou dans une gaine sous forme d'un parallèlépipède rectangle le cas échéant quatre tubes caloporteurs (10') sont groupés qui endéans le plan des plaques tubulaires (8) des tubes caloporteurs (10; 10') en dehors de leur périphéries et endéans les gaines (25; 25') aussi dans leurs régions axiales sont équipés avec les fermetures (24; 24'), les gaines (25; 25') sont fermement liés avec les plaques tubulaires (8), et dans le plan des plaques d'écoulement (9; 9') les fermetures (24; 24') interviennent également, des fermetures (24; 24') ne sont pas prévues dans des régions axiales endéans et seulement endéans ce deuxième plan ainsi que les couches non-tissées (13; 13') se trouvent entre les deux plans.

8. Accumulateur thermique selon l'une quelconque des revendications 1 à 7, **caractérisé en ce que** les tubes caloporteurs (10) sont remplacés par des profils de roulage qui forment les profils caloporteurs (10') et qui endéans une plaque tubulaire (8; 8') sont équipés avec un pressage (27) et endéans une plaque d'écoulement (9; 9') sont équipés avec un passage (26) et comportent la fermeture (24) débouchant dans un interstice longitudinal (28) et solidaire à la couche non-tissée (13).

9. Accumulateur thermique selon la revendication 8, **caractérisé en ce que** des tubes caloporteurs (10) and des profils caloporteurs (10') sont formés à partir d'une découpe unique des plats, des drapeaux (29; 29') du même matériau forment les guidages de moyen de travail (16; 16') avec les ouvertures (15; 15'), qui se trouvent interposés dans les deux plans entre les plaques tubulaires (8; 8') et les plaques d'écoulement (9; 9') endéans les couches non-tissées (13; 13') et qui comportent les fermetures (24; 24') entre les tubes caloporteurs (10) et les profils caloporteurs (10') endéans les plaques tubulaires (8; 8') ainsi que les drapeaux (29; 29') et qui avec leurs formations de fissure se tiennent largement étanche sur les plaques d'écoulement (9; 9') et sont dirigés dans les orifices (12; 12').

10. Accumulateur thermique selon l'une quelconque des revendications 1 à 9, **caractérisé en ce que** les guidages de moyen de travail (16; 16') comprennent également des couches non-tissées (13') mais d'une densité plus faible des tissus non-tissés que dans les couches non-tissées (13).

11. Accumulateur thermique selon l'une quelconque des revendications 1 à 10, **caractérisé en ce que** des dispositifs modifiés sont équipés avec des plaques tubulaires (8; 8') agencés les unes au-dessus les autres et adjacentes et les tubes caloporteurs (10) ou les profils caloporteurs (10') ne sont équipés qu'avec une plaque d'écoulement (9) agencée au-dessous ou au-dessus mais avec tous les autres détails constituent des tubes de plongée ou des profils de plongée sous forme des agencements coaxiaux ou excentriques avec les guidages de moyen de travail (16; 16').

12. Accumulateur thermique selon l'une quelconque des revendications 1 à 11, **caractérisé en ce que** le lit de sorbant (14) est divisé par portion en récipients sacciformes comportant du fil métallique et est introduit dans l'accumulateur thermique (1) avec les guidages de moyen de travail (16; 16') entre un nombre réduit de tubes caloporteurs (10) ou de profils caloporteurs (10').

13. Accumulateur thermique selon l'une quelconque des revendications 1 à 12, **caractérisé en ce que** celui-ci en tant que accumulateur thermique compact possède un réservoir non seulement pour l'évaporation mais aussi pour la condensation du moyen de travail et est combiné avec les deux, des agencements verticaux et horizontaux des tubes caloporteurs (10), des plaques d'écoulement (9; 9') et des couches non-tissées (13; 13') étant prévus aussi.

14. Accumulateur thermique selon l'une quelconque des revendications 1 à 13, **caractérisé en ce que** les couches non-tissées (13; 13') consistent en un paquet de granulés qui comportent
a) des sorbants silicieux microporeux du type zéolite ou des sorbants microporeux et mésoporeux du type des métallophosphates, alumophosphates ou silicoalumophosphates
ou
des adsorbants composites avec des hydrates de sel en tant que composant actif.
